Europäisches Patentamt

European Patent Office

Office européen des brevets

(11) Publication number: **0 074 164**
**A1**

## (12) EUROPEAN PATENT APPLICATION

(21) Application number: **82303711.4**

(22) Date of filing: **15.07.82**

(51) Int. Cl.³: **G 01 F 13/00**
**G 01 F 15/04, F 17 C 13/02**

(30) Priority: **22.07.81 GB 8122555**

(43) Date of publication of application:
**16.03.83 Bulletin 83/11**

(84) Designated Contracting States:
**AT BE CH DE FR GB IT LI NL**

(71) Applicant: **EUROMATIC MACHINE & OIL CO. LIMITED**
**Don Road St. Helier**
**Jersey Channel Island(GB)**

(72) Inventor: **Northedge, Ronald**
**Old Signal Point La Moye**
**St. Brelades Jersey Channel Islands(GB)**

(74) Representative: **Foster, David Martyn et al,**
**Mathisen, Macara & Co. Lyon House Lyon Road**
**Harrow Middlesex HA1 2ET(GB)**

(54) **Gas dispensing apparatus.**

(57) Gas dispensing apparatus includes transducers (12,18) for measuring the pressure, temperature and volume flow of gas through a pipe (5) during supply of gas to a customer's tank in a sales transaction. The values of the measured parameters are fed to computing means (22) which on termination of gas supply provides a virtually instantaneous output (24,26) of the standardised volume of gas sold in that transaction and its cost. During filling of the tank the parameters will vary. In particular once the tank is nearly full the volume flow rate will tail off. As the flow falls below a fixed value a valve (9) is closed in cut-off the gas supply automatically as, at this stage, the tank will be sufficiently full.

FIG. I.

EP 0 074 164 A1

## GAS DISPENSING APPARATUS

The present invention relates to apparatus for measuring the standard volume of gas flowing through a pipe, comprising transducing means for measuring each of the pressure, temperature and volume flow of the gas. The invention also relates to point of sale gas dispensing apparatus.

Such an apparatus may, for example, be used to dispense natural gas into a tank in a road vehicle for use as a fuel. In such an application the gas will be priced in dependence on the total mass or number of standard units of volume sold. A standard unit of volume relates to the volume occupied by a fixed mass of gas at a standard temperature and pressure.

It is well known to dispense liquid fuel such as gasoline from a garage forecourt pump that provides a virtually instantaneous read out of the cost of the liquid fuel dispensed in the particular sales transaction. Because in this case it is a liquid being dispensed which, under normal conditions of supply, does not have a significantly varying density, it is adequate to measure the volume flow and price the fuel per unit volume such as per gallon or per liter measured in the prevailing conditions.

An example of such a liquid fuel dispenser with means for outputting the price of the fuel dispensed is described in G.B. Patent Specification No.1,345,984.

There are also methods of measuring gas flow which have been suggested, in particular, for use in monitoring the amount of natural gas removed from an oil field so that it may be paid for usually at a later date on the basis of returns submitted.

One such flow measuring method is referred to in British Patent Specification No.1,306,716. This document suggests deriving a standard volume of gas by the formula:

$$Q_{SCF} = Q_{ACF} \quad \frac{P}{P_B} \quad \frac{T_B}{T}$$

where $Q_{SCF}$ represents the desired standard volume of gas in cubic feet;

$Q_{ACF}$ represents the actual measured volume of gas in cubic feet;

$P$ represents the pressure of the gas measured;

$P_B$ is the base pressure at which standard cubic feet of gas are measured;

$T_B$ is the base temperature at which standard cubic feet of gas are measured; and

$T$ is the temperature at which the actual gas measurements were made.

The specific apparatus described in the Specification measures the actual gas flow and the pressure or temperature only. Moreover the illustrated apparatus shows the flow being measured separately in a number of input pipes whereas only a single pressure or temperature measurement is made at a separate location. The apparatus described is concerned merely with the metering of a standard volume passed as its end output.

Another such apparatus for monitoring mass flow and mass flow rate of a gas through a pipe is described in British Patent Specification No. 1,349,256. In that apparatus the density and actual flow rate of the gas are measured.

Yet another such apparatus for monitoring gas flow and computing net flow is shown in British Patent Specification No. 1,366,970 wherein the flow rate is derived from its proportionality to $(\triangle P/T \times P)^{\frac{1}{2}}$. The apparatus therefore receives analog signals $P, \triangle P$ and $T$ representing absolute gas pressure, pressure drop across an orifice in a gas line and the gas temperature respectively.

In all of the above mentioned systems the conditions of temperature, pressure, density, pressure drop across an orifice, which are selected to be measured are relatively constant in the large scale applications for which these systems are envisaged for use. Where variations take place they are gradual and take place over relatively long time periods. Additionally, because it is intended to use these systems for continuous monitoring over long periods of time, it is adequate to measure the volume flow at a different location in another pipe from that at which the temperature or pressure is measured, as in above-referenced Patent Specification No. 1,306,716, as any instantaneous error is balanced over time.

The present apparatus is however, intended for quite a different application, that is for dispensing relatively small quantities of gas in a short time interval. Because the tank being filled will be small the back pressure as the tank fills up will affect the flow rate of the gas and other parameters quite rapidly as will be described in more detail later. Accordingly it is not possible to simply adopt any of the large scale systems for measuring the amount of gas dispensed as the output would be insufficiently accurate. None of these systems moreover provide a method of producing a virtually instantaneous readout of the price to be charged.

On the other hand, because it is a gas and not a liquid being dispensed, the prior art gasoline pumps are not appropriate due to the very significant variations in the gas density throughout the filling period.

The present invention is characterised in that the pipe is adapted at one end for connection to a gas supply and has a dispensing point at the other end for insertion into a customer's relatively small tank, and in that the apparatus further comprises means responsive to the outputs of the transducing means and to a unit cost value representing the cost per unit mass of the gas for computing and displaying virtually instantaneously a total cost output representing the cost of the mass of gas passed.

Such an apparatus allows an accurate price display for each sales transaction to be produced. The apparatus may be made in a simple and reliable form as will be described. The pressure, temperature and volume flow outputs allow accurate mass flow monitoring with the use of reliable transducers. It would have been possible to utilise a density transducer as a replacement for the pressure and temperature transducers. However, such transducers as are currently available are less reliable than those which may be used for pressure and temperature measurement. They are also less effective in the conditions of intended employment of the present apparatus where the gas flow will be stopped and started intermittently according to demand, as well as vary significantly during periods in which a tank is being filled.

The apparatus preferably includes low-flow means responsive to the mass flow falling below a predetermined rate to terminate passage of the gas in the pipe.

This feature is an extremely desirable safety device as it prevents a continued low flow of gas once a tank has been effectively filled which may escape and represent a fire or explosion hazard. It also effectively prevents over-filling of a tank which, if the temperature of the tank increased, might cause excessive pressures to be present in it, which could ultimately lead to an explosion. This feature may also be effectively utilised to limit the dispensing time to a reasonable period.

The invention also provides a point of sale dispensing apparatus for dispensing variable quantities of a gas and indicating the sale price of the mass of gas dispensed in each said quantity, comprisng a pipe through which each said quantity of the gas flows, a first electrical transducer for producing a first electrical output dependent on the pressure of the gas in the pipe, a second electrical transducer forproducing a second electrical output depending on the temperature of the gas in the pipe, a third electrical transducer for producing a third electrical output dependent on the volume flow of the gas in the pipe, computing means responsive to electrical signals respectively proportional to the first, second and third outputs to produce a fourth electrical output proportional to the product of the first and third outputs divided by the second output modified by a variable correcting factor and thereby proportional to the mass of gas in the said quantity, setting means pre-settable to produce an electrical control signal dependent on the cost per unit mass of the gas, means for multiplying the said fourth output by the electrical control signal to produce a fifth output equal to the selling price of the quantity of gas dispensed, and display means for indicating the fifth output.

An embodiment of the invention will now be described by way of example only with reference to the accompanying drawings, in which:

Figure 1 is a block diagram of the apparatus showing part of a transducer assembly in section;

Figure 2 is a section on line II-II of Figure 1; and

Figure 3 is a block circuit diagram of the apparatus.

In the particular example being described, the apparatus is used at a dispensing point where natural gas is dispensed to  road vehicles using such gas as a fuel. The fuel is charged to the customer at.a price dependent on the charge per standard cubic metre dispensed and the apparatus produces a reading in terms of the total  charge for the numbers of standard cubic metres of gas purchased.

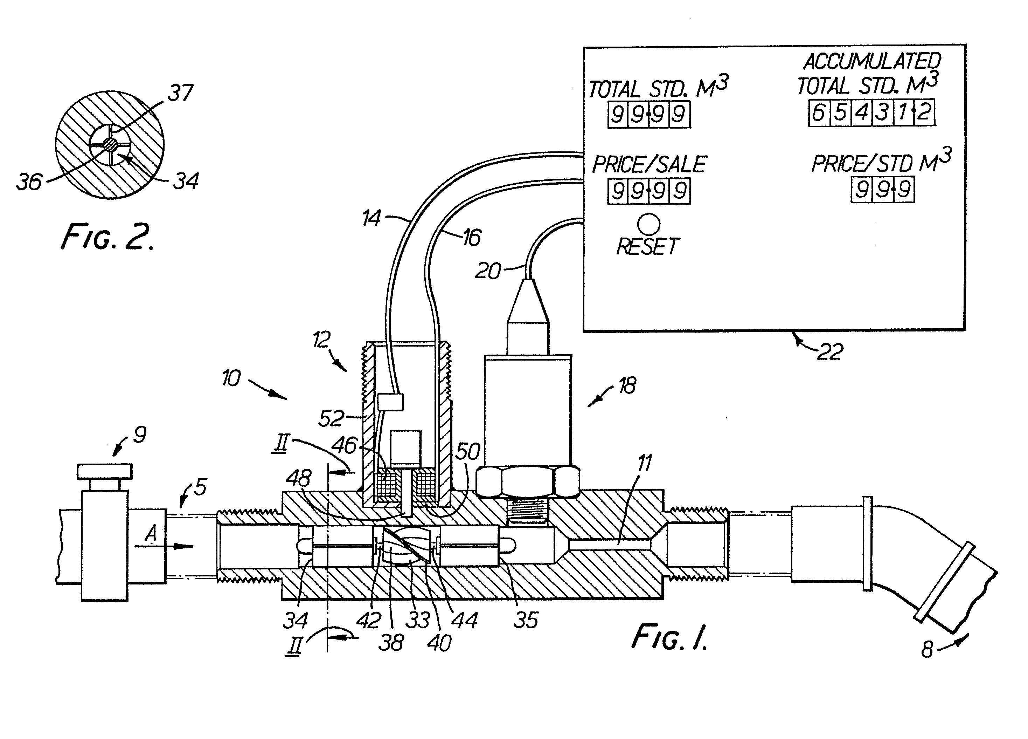

As shown in Figure 1, the gas is dispensed in the direction of the arrow A through a pipe 5 from a source (not shown) of the gas under pressure to a motor vehicle positioned at a dispensing point indicated generally at 8. The flow of gas is controlled by a valve 9.   The pipe 5 incorporates a transducer assembly shown generally at 10 and a restrictor 11.   The valve 9 is preferably a solenoid valve and may alternatively be disposed downstream of the transducer assembly 10.

The transducer assembly 10 measures three parameters of the gas, that is, its volume rate of flow, its pressure, and its temperature. Volume rate of flow and temperature are measured by a transducer 12 which produces electrical outputs on cables 14 and 16 representing these two measured parameters, and a transducer 18 measures pressure and produces a corresponding electrical output on a cable 20. Cables 14, 16 and 20 are fed to computing circuitry, to be described below, in a computing and display unit 22. As shown in Figure 1, the unit 22 has four indicators, 24, 26, 28 and 30. Indicator 24 indicates the flow of gas, in standard cubic metres, for a particular sale, and the indicator 26 indicates the total charge for this sale. Indicator 28 indicates the total number of standard cubic metres dispensing by the apparatus. Indicator 30 indicates the price charged per standard cubic metre.

Indicators 24, 26 and 30 may be electrical or electronic indicators, for example filament-type indicators. Indicator 28 may be an electromechanical counter. Indicators 24 and 26 are reset to zero by a reset button 32 after each sale has taken place, or might, for example, be arranged to be automatically reset to zero each time the valve 9 is closed.

The price per standard cubic metre which the apparatus uses in computing the charge for each sale, and which is indicated on the indicator 30, is adjustable by means of controls which would normally only be accessible to the seller.

The pressure transducer 18 may be of any suitable conventional type. It may, for example, be a strain gauge-type using an electrical bridge circuit.

An additional cable (not shown) conducts the electrical output representing the volume rate of flow from the transducer 12 to a low flow sensor (not shown) which produces an output which allows the solenoid valve 9 to remain open while the volume flow rate output remains above a predetermined value. For example where the flow rate output is a pulse train the frequency of which is proportional to the volume flow as in the transducer to be described, the low-flow sensor may include an integrator acting as a frequency to voltage converter the output of which supplies one input of a comparator to which a reference voltage is applied representative of the predetermined value which may be set as required. The output of the comparator may then be used to control the current supply to the solenoid of the solenoid valve 9 to close the valve 9 once the flow falls to the set rate. Where the output from the transducer is arranged to be in the form of a current which varies in accordance with the flow rate, the integrator may be omitted and the voltage drop across a fixed resistor in the flow rate output cable used as the other input to the comparator. For example the transducer may have an output which varies in the range 4-20 mA.

The flow and temperature transducer 12 is illustrated in more detail.

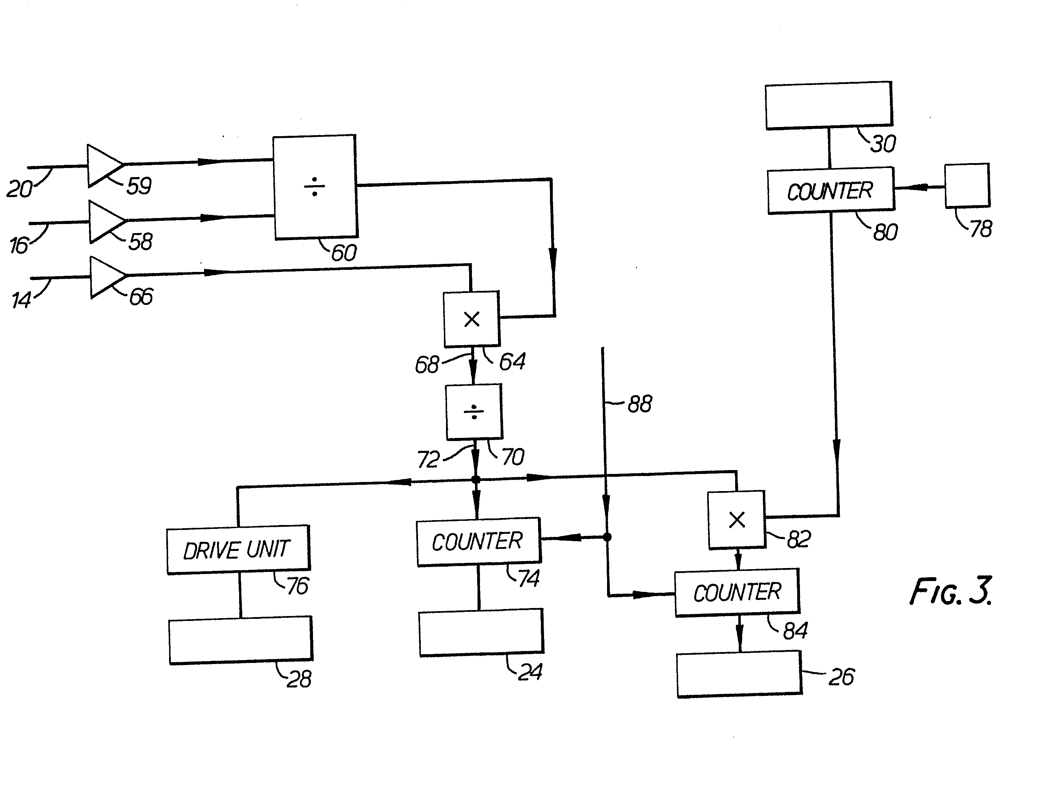

As shown, flow is measured by a rotatable turbine 33 which is mounted for rotation in the pipe 5 by support blocks 34 and 35. As shown in Figure 2, each support block is in the form of a solid cylindrical body 36 having external fins 37 which are aligned with the direction of flow in the pipe. The support blocks may be fixed in position by being a tight fit in the pipe.

The turbine 33 is in the form of a solid cylindrical body 38 having external fins 40 which are inclined to the direction of flow. The turbine is supported for rotation on the support blocks 34 and 35 by means of axles 42 and 44 running in appropriate bearings.

The turbine is advantageously made of a magnetic form of stainless steel such as Firth Vickers type 520, EN56, American Specification 174PH or later equivalents.

In operation, the turbine rotates at a rate dependent on the volume rate of flow of the gas. An electrical pulse output whose frequency is proportional to the rotation of the turbine 33, and thus to the volume rate of flow, is produced by means of an electrical coil 46 wound around a soft iron core having an extension 48 terminated close to the outside wall of the pipe near to the turbine 33. As the turbine 33 rotates, the movement of each fin 40 past the end of the extension 48 will induce an electrical pulse in the coil 46 and these pulses are passed to the computing and display unit 22 on the cable 14.

The temperature of the gas in the pipe 5 is measured by means of a resistance element 50 which is embedded in the closed-off end of the body 52 of the transducer. The electrical resistance of the resistance element 50 varies with its temperature and can thus be used to produce an electrical output on the cable 16 in dependence on the temperature in conventional manner.

The resistance element may, for example, be in the form of a platinum film.

Figure 3 shows a block circuit diagram of the computing and display unit 22.

Cables 16 and 20 feed the analogue electrical signals representing temperature (T) and pressure (P) of the gas to respective amplifiers 58 and 59 and thence to an analogue divider 60. The divider produces an output proportional to the P/T on line 62 and this sets the modification factor of a programmable multiplier 64.

The pulse output on cable 14 representing the volume flow (F) of the gas is processed in a multiplying and pulse-shaping circuit 66 and then multiplied in the multiplier 64. Multiplier 64 therefore produces a pulsed output on a line 68, the number of pulses being proportional to F x (P/T) which will therefore be proportional to the flow in terms of standard cubic metres. The pulsed output on line 68 is fed through a programmable divider 70 which is pre-settable in accordance with the particular type of gas and other constants in the system so that the pulsed output on line 72 represents the number of standard cubic metres. The pulses are counted in a counter 74 and the count is displayed on the indicator 24 (see also Fig.1).

The pulsed output on line 72 is also fed to a drive unit 76 which drives an electromechanical counter constituting the indicator 28.

A control unit 78 enables the seller of the gas to set in the unit selling price of the gas, that is, the price to be charged per standard cubic metre, and this sets indicator 30 via a counter 80. In addition, the count of counter 80 sets the multiplication factor of a programmable multiplier 82 which also receives the pulsed output on line 72. Multiplier 82 therefore produces a pulsed output, each pulse of which represents sale of a fixed fraction of a standard cubic metre of the gas, e.g.one hundredth of a standard cubic metre, These pulses are counted by a counter 84 and the count displayed on indicator 26.

Counters 74 and 84 are reset by means of a reset line 88 when each sale has been completed.

It will be appreciated that the circuit shown in Figure 3 is merely one example of various different types of circuitry which may be used.

In particular, because very high gas pressures are used when filling a motor car tank, typically up to 4000 p.s.i. (27.5 kN/m$^2$), the ideal gas approximation utilized in the previously described circuitry is not sufficiently accurate. This is due to the "Z" factor (super compressibility). Therefore, in order to provide outputs within the acceptable commercial standards (plus or minus 1-2%), it is necessary to modify the circuitry of Figure 3. For example a further programmable multiplier may be introduced between the output of divider 60 and the input to multiplier 64. This further multiplier must also receive inputs from the transducer assembly 10 so as to determine the necessary correcting factor. Alternatively the divider 70 may be arranged to divide by a factor which is variable according to the pressure and temperature conditions prevailing at that instant in the pipe 5.

This high pressure correction is particularly necessary during the latter part of a filling operation of a vehicle tank designed to work under a pressure of, say, 3000 to 3500 p.s.i.

The circuitry may be arranged to produce electrical analogue or digital outputs representing each of the three parameters P, T and F, and the calculated values of standard cubic metres sold and the charges made, for transmission to a distant monitoring or control point.

The apparatus, or at least that part of it adjacent to the pipe 5, may be made intrinsically safe.

Different types of transducers from those shown in Figure 1 may be used for measuring the three parameters.

When the apparatus is used to fill a customer's tank the valve 9 is first opened on initiaion of the sale. This causes gas to flow at a relatively high rate from the pressurised supply to the empty tank. This flow rate builds up from zero on opening of the valve very rapidly and may be considered to be a step function. Once the tank begins to fill it generates a back pressure which tends to reduce the rate of flow which falls off approximately exponentially. During this decline in flow rate the pressure and temperature of the gas will also vary and the transducing assembly must be capable of monitoring these changes as they occur to maintain the displays on indicators 24, 26 and 28 accurate throughout the sale. Once the flow falls to the predetermined value set at the low-flow sensor, the valve 9 is closed and the price displayed by indicator 26 is the total charge to be paid for the gas supplied. The flow rate at which the apparatus is set to terminate flow may be adjustable or preset, but is generally selected in order to set a reasonable time limit on the filling operation. This will be at a point when more gas would still be accepted in the tank. However, it is desirable, for safety reasons, that this should be so, as it allows room in the tank for the gas to expand as the temperature increases without the pressure in the tank becoming excessive and possibly causing an explosion. The positive shut-off of the supply also serves to prevent gas being leaked to atmosphere or flowing back out of the tank when over-filled and is therefore a valuable safety feature as well as a convenient means of automating the supply operation.

Once the supply is complete the source gas supply is repressurised to make up for the loss of pressure during the previous transaction, so as to provide a high initial flow rate when the valve is again opened on initiation of another sale.

CLAIMS

1.    Apparatus for measuring the standard volume of gas flowing through a pipe (5), comprising transducing means (10) for measuring each of the pressure, temperature and volume flow of the gas, characterised in that the pipe (5) is adapted at one end for connection to a gas supply and has a dispensing point (8) at the other end for insertion into a customer's relatively small tank, and in that the apparatus further comprises means (22,60,64,70) responsive to the outputs (14,16,20) of the transducing means (10) and to a unit cost value (30) representing the cost per unit mass of the gas for computing and displaying virtually instantaneously a total cost output (26) representing the cost of the mass of gas passed.

2.    Apparatus according to claim 1, characterised in that it further comprises low-flow means responsive to the mass flow falling below a predetermined rate to terminate passage of the gas in the pipe.

3.    Apparatus according to claim 2, characterised in that it includes a valve (9), and means for opening the valve (9) on initiation of a dispensing operation, said valve (9) being closed under control of the low-flow means at completion of the dispensing operation.

4.    Apparatus according to claim 3, characterised in that said valve (9) is a solenoid valve (9) and said volume flow output (14) from the transducing means (10) is an electrical signal which is utilised to maintain said solenoid valve open until the signal level or rate where the signal is pulsed falls below a predetermined value indicative of said predetermined flow rate.

5.    Apparatus according to any preceding claim, characterised in that the transducing means (10) includes an element (33) rotatably mounted in the pipe (5) so as to rotate in dependence on the volume flow of the gas, and pick-up means (46,48) mounted externally of the pipe (5) for producing an electrical output (14) dependent on the rotation of the rotatable element and therefore dependent on the volume flow of the fluid.

6.    Apparatus according to claim 5, characterised in that rotatable element (33) is in the form of a turbine (33).

7.    Apparatus according to claim 5 or 6, characterised in that the pick-up means (46,48) comprises electromagnetic means including an electrical coil (46) in which electrical pulses are electromagnetically generated in dependence on the rotation of the element.

8.    Apparatus according to any one of claims 5 to 7, characterised in that the transducing means (10) includes an electrical temperature-responsive element (50) mounted in the pick-up means (46,48) so as to produce an electrical output dependent on the temperature of the gas in the pipe (5).

9.    Apparatus according to claim 8, characterised in that the electrical temperature-responsive means (50) comprises a temperature-responsive resistance element (50).

10.    Point of sale dispensing apparatus for dispensing variable quantities of a gas and indicating the sale price of the mass of gas dispensed in each said quantity, comprising a pipe (5) through which each said quantity of the gas flows, a first electrical transducer (18) for producing a first electrical output (20) dependent on the pressure of the gas in the pipe (5), a second electrical transducer (50) for producing a second electrical output (16) dependent on the temperature of the gas in the pipe (5), a third electrical transducer (46,48) for producing a third electrical output (14) dependent on the volume flow of the gas in the pipe (5), computing means (22,60,64,70) responsive to electrical signals respectively proportional to the first, second and third outputs for producing a fourth electrical output (72) proportional to the product of the first and third outputs divided by the second output modified by a variable correcting factor and thereby proportional to the mass of gas in the said quantity, setting means (78,80,30) pre-settable to produce an electrical control signal dependent on the cost per unit mass of the gas, means (82) for multiplying the said fourth output by the electrical control signal to produce a fifth output equal to the selling price of the quantity of gas dispensed, and display means (26) for indicating the fifth output.

11. Apparatus according to claim 10, characterised in that it includes further indicating means (24) for indicating the said fourth output.

12. Apparatus according to any preceding claim, characterised in that the said gas is natural gas.

0074164

ACCUMULATED
TOTAL STD. M³
6 5 4 3 1 2

PRICE/STD M³
9 9 9

TOTAL STD. M³
9 9 9 9

PRICE/SALE
9 9 9 9

○ RESET

22

18

20

16

14

12

10

50

52

46

48

II

11

35

44

33  40

38

42

34

II

5

9

A

8

Fig. 1.

37

34

36

Fig. 2.

Fig. 3.

| DOCUMENTS CONSIDERED TO BE RELEVANT | | | EP 82303711.4 |
|---|---|---|---|
| Category | Citation of document with indication, where appropriate, of relevant passages | Relevant to claim | CLASSIFICATION OF THE APPLICATION (Int. Cl. ³) |
| A | US - A - 4 101 056 (MATTIMOE) <br> * Abstract; fig. 2,4,5; column 16, lines 26-40 * | 1 | G 01 F 13/00 <br> G 01 F 15/04 <br> F 17 C 13/02 |
| A | GB - A - 1 336 253 (GAZ DE FRANCE) <br> * Page 1, lines 9-22 * | 1 | |
| D,A | GB - A - 1 306 716 (DANIEL INDUSTRIES) <br> * Page 1, lines 29-54 * | 1 | |
| | | | TECHNICAL FIELDS SEARCHED (Int. Cl. ³) <br><br> G 01 F 13/00 <br> G 01 F 15/00 <br> G 06 F 15/00 <br> F 17 C 13/00 |

| X | The present search report has been drawn up for all claims | | |
|---|---|---|---|
| Place of search <br> VIENNA | Date of completion of the search <br> 26-11-1982 | | Examiner <br> STÖGER |